# FASCICULE DE BREVET EUROPEEN

(11) **EP 2 632 864 B1**
(45) Date de publication et mention de la délivrance du brevet: **01.05.2019**
(21) Numéro de dépôt: 11794533.7
(22) Date de dépôt: 24.10.2011
(51) Int. Cl.: C03B 11/10, C03B 11/14

(54) **MOULE ET PROCEDE POUR FABRIQUER UN FLACON EN VERRE ET FLACON AINSI OBTENU**
FORM UND VERFAHREN ZUR HERSTELLUNG EINER GLASFLASCHE UND GEWONNENE FLASCHE
MOULD AND PROCESS FOR MANUFACTURING A GLASS BOTTLE AND RESULTING BOTTLE

(30) Priorité: 26.10.2010 FR 1058795
(43) Date de publication de la demande: 04.09.2013
(73) Titulaire: Shiseido International France, 75008 Paris (FR)
(72) Inventeur: RONSIN, Hervé, F-56140 Malestroit (FR); SOULARD, Fabrice, F-45450 Fay Aux Loges (FR)
(74) Mandataire: CAPRI
(86) Numéro de dépôt international: PCT/FR2011/052474
(87) Numéro de publication internationale: WO 2012/056154

(56) Documents cités:
- EP-B1- 1 091 912
- WO-A2-03/016150
- FR-A1- 2 631 936
- JP-A- 1 065 032
- US-A- 1 056 217
- US-A1- 2010 147 029
- US-B1- 6 216 493
- US-B1- 6 415 631

## Description

La présente invention concerne un moule et un procédé pour la fabrication d'un corps creux de flacon en verre, le corps creux étant destiné à être associé à un fond pour constituer le flacon, le corps creux comprenant une extrémité inférieure ouverte donnant accès à un intérieur creux, une extrémité supérieure formant un col de flacon adapté au montage d'un organe de distribution, tel qu'un bouchon ou une pompe, et une section principale creuse reliant les deux extrémités, cette section principale creuse définissant une surface interne et une surface externe, le moule comprenant un ensemble d'empreintes externes de moule pour mouler la surface externe et le col de flacon. L'invention concerne également un flacon en verre réalisé avec le moule de l'invention selon le procédé de l'invention. De tels flacons en verre sont fréquemment utilisés dans le domaine de la parfumerie et de la cosmétique, en association avec un organe de distribution, tel qu'une pompe manuelle, sur laquelle l'utilisateur peut appuyer à l'aide d'un doigt pour distribuer des doses de produit.

Actuellement, les flacons de parfum et de produit cosmétique sont réalisés en verre sodocalcique selon deux procédés différents : le premier procédé consiste au soufflage dans un moule ébaucheur, puis après retournement soufflage dans un moule finisseur. Le second procédé consiste au pressage dans un moule ébaucheur, puis au soufflage dans un moule finisseur. Dans les deux cas, l'intérieur du flacon est formé par soufflage. Ces deux procédés de l'art antérieur ne sont pas adaptés pour réaliser des formes précises à l'intérieur du flacon en verre, car le seul refoulement du verre par l'air comprimé ne permet pas physiquement de marquer le verre avec des formes précises (arêtes, rayons de faible courbure). JP 01065032 décrit la fabrication de récipients grâce à une méthode de pressage.

Par conséquent, un but de la présente invention est de former un corps en verre creux sodocalcique ou borosilicate comprenant une surface interne de forme complexe (cannelée, facettée, relief comportant des arêtes et des rayons de courbure faible).

Pour atteindre ce but, la présente invention prévoit que le moule comprend en outre un poinçon de forme qui est enfoncé dans l'ensemble d'empreintes externes pour former la surface interne, le poinçon de forme pénétrant dans l'ensemble d'empreintes externes par une ouverture qui correspond à l'extrémité ouverte du corps creux du flacon, l'ensemble d'empreintes externes et le poinçon définissant ensemble une cavité de moulage/pressage dans laquelle le verre en fusion est pressé par l'enfoncement du poinçon de forme dans l'ensemble d'empreintes externes. Ainsi, le poinçon de forme coulisse axialement à l'intérieur de l'ensemble d'empreinte externe de manière à diminuer le volume utile de la cavité de moulage/pressage jusqu'à ce qu'elle soit entièrement et uniquement remplie avec le verre en fusion. On garantit ainsi que le poinçon de forme vient en contact intime et pressant contre le verre en fusion pour former de manière précise la surface interne du corps creux. Au final, on obtient un corps creux moulé et pressé aussi bien à l'extérieur qu'à l'intérieur, mais présentant une extrémité inférieure largement ouverte qui va être obturée par le fond rapporté.

Selon un aspect pratique de l'invention, le poinçon de forme peut comprendre un pointeau pour former l'intérieur du col de flacon, ou tout au moins générer une forme de pré-perçage. En variante, il est également possible que le corps creux à la sortie du moule définisse un col de flacon sans ouverture qui va ensuite être réalisé par usinage, tel que par perçage ou alésage, et éventuellement rodage.

Avantageusement, le poinçon de forme peut comprendre une paroi externe structurée présentant des reliefs ayant un rayon de courbure inférieur à environ 2 mm et avantageusement un angle de conicité de 0,5 à 10 degrés. En effet, grâce à la technique de l'invention, il est possible de réaliser des reliefs très précis au niveau de la surface interne du corps creux avec des rayons de courbure inférieurs à 2 mm, ce qui est totalement impossible avec les deux procédés de l'art antérieur exposés ci-dessus qui sont basés sur le soufflage.

Selon une caractéristique avantageuse de l'invention, le poinçon de forme peut comprendre un cylindre de faible conicité pourvu d'orifices latéraux pour le passage de tiroirs de forme, le cylindre comprenant avantageusement un axe interne mobile permettant de sortir et rentrer les tiroirs de forme.

L'invention définit également un procédé de fabrication d'un corps creux dans lequel un poinçon de forme est enfoncé dans l'ensemble d'empreintes externes pour presser le verre en fusion dans une cavité moulage/pressage formée conjointement par l'ensemble d'empreintes externes et le poinçon de forme, le poinçon de forme pénétrant dans l'ensemble d'empreintes externes par une ouverture qui correspond à l'extrémité inférieure ouverte du corps creux. Avantageusement, l'intérieur du col de flacon est formé par le poinçon de forme. En variante, l'intérieur du col de flacon est réalisé par usinage, avantageusement par alésage ou perçage, puis rodage.

Avantageusement, le fond rapporté est fixé à l'extrémité inférieure du corps creux par collage, vissage, encliquetage ou soudage thermique.

Le procédé de l'invention prévoit ainsi de réaliser de manière séparée le corps creux et le fond de manière à pouvoir réaliser la surface interne du corps creux avec une très grande précision. Ensuite, le fond est rapporté et fixé de manière définitive et étanche à l'extrémité inférieure ouverte du corps creux pour constituer le flacon en verre.

L'invention définit également un flacon réalisé selon le procédé de fabrication décrit ci-dessus, un joint d'étanchéité étant interposé entre l'extrémité inférieure du corps creux et le fond rapporté. Selon un aspect pratique, un joint d'étanchéité peut être interposé entre l'extrémité inférieure du corps creux et le fond rapporté.

Au final, on obtient un flacon dont la surface interne du corps creux comprend des reliefs ayant un rayon de courbure qui peuvent être inférieurs à environ 2 mm.

Le but de l'invention est d'appliquer la technique de moulage/pressage au flacon en verre en décomposant le flacon en deux parties distinctes, à savoir un corps creux d'un côté et un fond d'un autre côté. De cette manière, il est possible de réaliser la surface interne du corps creux avec une très grande précision, bien supérieure à celle obtenue avec les techniques de soufflage de l'art antérieur, conventionnellement utilisées pour la fabrication de flacon en verre.

L'invention sera maintenant plus amplement décrite en référence aux dessins joints, décrivant de manière non limitative, différents aspects structurels et de procédé de la présente invention.

Sur les figures :
La figure 1 est une vue explosée en perspective d'un flacon en verre réalisé selon la présente invention,
La figure 2 est une vue en coupe du flacon de verre de la figure 1 à l'état assemblé,
La figure 3 est une vue très fortement agrandie du détail D de la figure 2,
Les figures 4a à 4e représentent de manière très schématique un procédé de fabrication d'un flacon en verre utilisant un moule de l'invention,
Les figures 5c à 5e sont des vues schématiques illustrant une variante des étapes des figures 4c à 4e, et
La figure 6 est une vue schématique illustrant l'étape d'assemblage du fond rapporté sur le corps creux.

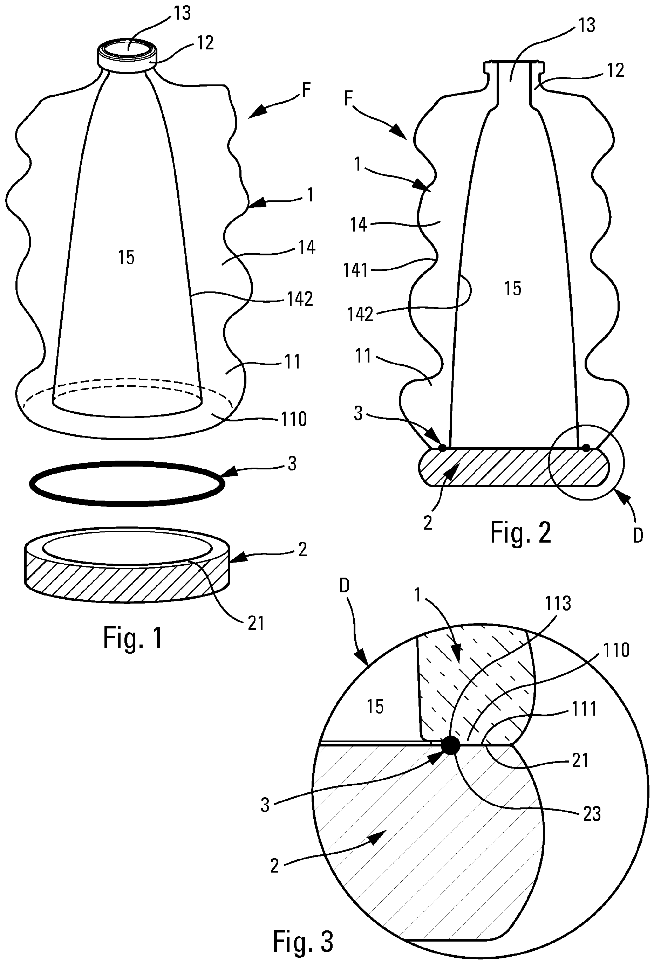

On se référera tout d'abord aux figures 1 à 3 pour décrire en détail la structure d'un flacon en verre réalisé selon la présente invention. Contrairement à ce qui se fait conventionnellement dans le domaine du flaconnage en verre, particulièrement dans le domaine de la parfumerie et des produits cosmétiques, le flacon F de la présente invention est réalisé en deux pièces essentielles, à savoir un corps creux 1 et un fond rapporté 2. Le joint d'étanchéité 3 est une pièce optionnelle qui est mise en oeuvre selon la technique de fixation adoptée pour rapporter le fond 2 sur le corps creux 1.

Le corps creux 1 est réalisé en verre, par exemple du verre sodocalcique ou du verre borosilicate. Le procédé de fabrication utilisé est un procédé de moulage/pressage comme on le verra ci-après. Le corps creux 1 comprend une extrémité inférieure largement ouverte 11 définissant un bord périphérique annulaire 110. A son extrémité opposée, le corps creux 1 forme un col 12 définissant une ouverture 13. Avantageusement, le col 12 fait saillie à partir d'un épaulement et présente une dimension qui est bien inférieure à celle du corps creux. Entre ces deux extrémités, le corps creux 1 définit une section principale creuse 14 comprenant une surface externe 141 et une surface interne 142. Cette surface interne 142 définit entre les deux extrémités du corps creux 1 un intérieur creux 15 qui va ensuite définir le volume utile du flacon, lorsque le fond sera rapporté sur le corps creux, comme on le verra ci-après. La forme ou la géométrie de la surface externe 141 est différente de celle de la surface interne 142, ce qui signifie que l'épaisseur de paroi du corps creux entre les surfaces 141 et 142 varie d'un endroit à l'autre. Dans l'exemple utilisé pour illustrer la présente invention, on peut remarquer que l'épaisseur de paroi est plus importante dans la partie supérieure du corps creux que dans sa partie inférieure. On pourrait également dire que la surface interne 142 est convergente ou de forme très globalement tronconique en direction du col 12 : la conicité correspond à l'angle de dépouille nécessaire à l'extraction du poinçon de forme. Bien entendu, l'ouverture 13 définie par le col 12 permet de faire communiquer l'intérieur creux 15 avec l'extérieur à travers le col 12, comme on peut très clairement le voir sur la figure 2.

Selon une autre caractéristique de l'invention, le poinçon de forme peut être constitué d'un cylindre de faible conicité pourvu d'orifices latéraux desquels on pourra escamoter des tiroirs permettant d'apporter les motifs en relief. Cette cinématique nécessite un axe interne mobile dans le cylindre permettant de sortir et rentrer au moment opportun les tiroirs pendant le cycle de pressage.

Le fond 2 peut être réalisé avec le même matériau que le corps creux 1, mais il peut également être réalisé en matière plastique, en métal, en matière minérale, etc. Le fond 2 définit un bord supérieur annulaire 21 destiné à s'adapter au bord inférieur annulaire 110 de l'extrémité inférieure ouverte 11 du corps creux 1. Sans sortir du cadre de l'invention, on peut prévoir que le fond 2 est fixé au corps creux 1 par soudage, vissage, encliquetage. Il suffit pour cela de prévoir des profils adaptés au niveau du corps creux 1 et/ou du fond 2. Selon une autre technique représentée sur les figures 1 à 3, le fond 2 est collé sur le corps creux 1. Pour cela, le bord inférieur 110 du corps creux 1 définit une zone de contact 111 qui est destinée à venir en contact intime avec une zone de contact correspondante 21 formée par le bord annulaire 21 du fond 2. On peut par exemple utiliser une colle UV pour réaliser le collage du fond 2 sur le corps creux 1. On peut également remarquer sur la figure 3 que le bord annulaire inférieur 110 du corps creux 1 définit une gorge 113 pour le logement du joint d'étanchéité 3. Ceci est également le cas pour le bord supérieur 21 qui forme une rainure correspondante 23. La position du joint d'étanchéité 3 permet de séparer l'intérieur creux 15 de la zone de collage périphérique définie par les zones de contact 111 et 21. De cette manière, la colle UV ne peut pas venir en contact avec le parfum stocké dans le flacon. Un collage optimal est obtenu avec une colle UV sous pression en comprimant le joint d'étanchéité 3. Il est cependant possible de se passer du joint d'étanchéité 3, en utilisant une technique de soudage étanche.

Cette extrémité inférieure largement ouverte 11 à la base du corps creux de plusieurs dizaines de millimètres permet également de faciliter l'introduction d'éléments ou de revêtements décoratifs à l'intérieur du flacon avant sa fermeture par le fond rapporté, ce qui est impossible à réaliser dans un flacon traditionnel possédant une petite ouverture par le col de quelques millimètres seulement. La surface interne (142) du corps creux (1) ou le fond rapporté (2) peuvent comprendre un ou plusieurs éléments décoratifs inertes au contact du parfum : ces éléments additionnels pourront être constitués par exemple de verre, bois, métal, minéral, textile ... En variante ou en combinaison , la surface interne (142) du corps creux (1) et/ou le fond rapporté (2) comprennent un revêtement décoratif inertes au contact du parfum : Ces éléments décoratifs internes pourront être réalisés par sérigraphie ou chromo émail, frittage d'émail, fusion thermique, gravure laser, gravure mécanique, gravure chimique, dépôt sol gel ou dépôt chimique d'argent, ou tout autre métal inerte au parfum.

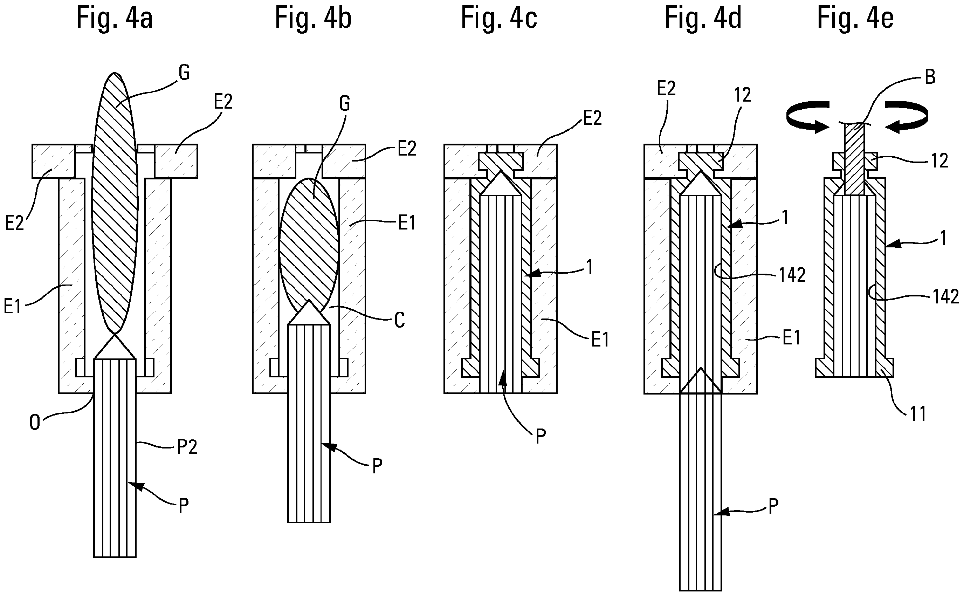

On se référera maintenant aux figures 4a et 4e pour décrire en détail le procédé de fabrication ainsi que le moule utilisé. Comme susmentionné, le procédé de moulage utilisé dans le cadre de l'invention est un procédé de moulage/pressage permettant de mouler avec une grande précision aussi bien l'extérieur que l'intérieur du corps creux. Pour cela, on utilise un moule particulier comprenant un ensemble d'empreinte externe E1, E2 permettant de mouler la surface externe 141 du corps creux ainsi que la surface externe du col 12. L'ensemble d'empreinte externe E1, E2 peut comprendre un nombre quelconque d'éléments fixes ou mobiles les uns par rapport aux autres. L'empreinte E1 peut par exemple être réalisée de manière monobloc et fixe. Quant à l'empreinte E2, elle peut comprendre deux pièces mobiles l'une par rapport à l'autre. L'empreinte E2 sert à mouler la surface externe du col 12, alors que l'empreinte E1 sert à mouler la surface externe 141. Selon l'invention, le moule comprend également un poinçon de forme P qui pénètre à l'intérieur de l'ensemble d'empreintes externes E1, E2 à travers une ouverture inférieure O qui correspond à l'extrémité inférieure ouverte 11 du corps creux. Le poinçon de forme P est adapté à se déplacer ou à coulisser axialement à l'intérieur de l'ensemble d'empreintes externes E1, E2 de manière à faire varier le volume d'une cavité de moulage/pressage C définie entre eux. Ainsi, une paraison de verre en fusion G peut être introduite à l'intérieur de l'ensemble d'empreintes externes E1, E2, comme représenté sur la figure 4a. La paraison est introduite à travers l'empreinte E2 qui n'est pas encore dans son état refermé. En se référant maintenant à la figure 4b, on peut voir que l'empreinte E2 a été refermée de sorte que la cavité C est maintenant isolée de l'extérieur. Le poinçon de forme P peut alors être enfoncé à l'intérieur de l'ensemble d'empreintes de manière à diminuer le volume utile de la cavité C. Au final, la totalité de la cavité C est entièrement remplie de verre en fusion, comme représenté sur la figure 4c. Le corps creux 1 est alors moulé. Le poinçon de forme P a défini la surface interne 142 du corps creux 1. Avantageusement, le piston de forme P comprend une paroi externe P2 présentant un relief ayant un rayon de courbure inférieur à environ 2 mm de manière à définir des reliefs de grande précision au niveau de la surface interne 142. Le poinçon de forme P devra présenter une conicité avec un angle de dépouille de quelques degrés suffisant pour pouvoir être retiré sans arracher le verre. Le poinçon de forme P peut alors être retiré, comme représenté sur la figure 4d. L'ensemble d'empreintes E1, E2 peut être ouvert afin d'en extraire le corps creux moulé pressé 1. En variante, le poinçon de forme est retiré une fois l'empreinte E1 ouverte. Une dernière étape consiste à usiner l'ouverture 13 au niveau du col 12 au moyen d'une broche d'alésage ou de perçage B, puis éventuellement un rodage. Le corps creux 1 est alors dans son état final. Sa paroi interne 142 présente le relief de précision conféré par pressage par le poinçon de forme P. Il est à noter que le procédé de la présente invention n'utilise aucune étape de soufflage : le corps creux 1 est entièrement pressé.

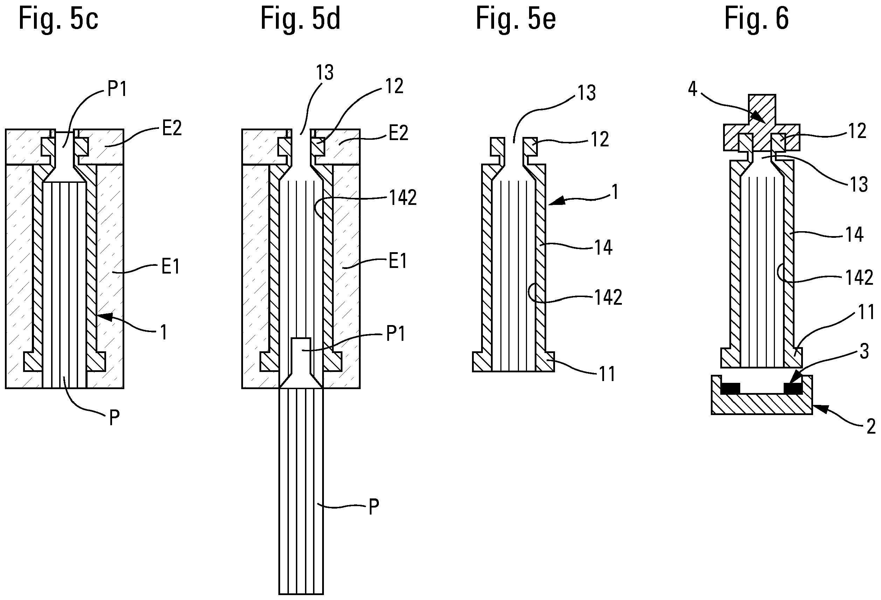

En variante, à l'étape finale d'usinage de l'ouverture 13, on peut également utiliser un poinçon de forme P comprenant un pointeau P1, comme visible sur la figure 5c. Ainsi, ce pointeau P1 va définir l'ouverture 13 du col 12, après retrait du poinçon de forme P, comme représenté sur la figure 5d. On obtient ainsi un corps creux 1 qui ne nécessite plus aucune étape ultérieure d'usinage, et qui peut donc être directement utilisée lors de l'étape d'assemblage du fond 2, comme représenté sur la figure 6. On peut également remarquer qu'un organe de distribution 4 a été monté sur le col 12, obturant ainsi l'ouverture 13. Grâce à l'invention, on peut remplir le flacon par son extrémité inférieure ouverte 11, avant de rapporter le fond 2.

Le choix de l'acier constitutif de ce poinçon de forme ainsi que la qualité de son traitement de surface sont primordiaux pour assurer une résistance à des cycles de températures proches de 1150°C, sans se déformer ou fondre. Par exemple, un bronze ou un acier métallisé à 80% au nickel et carbure de tungstène ou cobalt sur quelques dixièmes de millimètres pourra être utilisé. Dans le cas de résistance extrême à la chaleur, des poinçons et pointeau à base d'un revêtement en céramique sont également envisageables.

En variante non représentée, il est possible à réaliser le corps creux du flacon non pas par une cavité, mais par deux demi coquilles qui sont pressées, puis assemblées à chaud par fusion. Le fond est ensuite éventuellement rapporté de la manière décrite ci-dessus ou directement formé par les demi-coquilles.

L'invention définit ainsi non seulement un moule et un procédé pour la fabrication d'un corps creux de flacon de verre, mais également un flacon de verre en deux parties, avec le corps creux entièrement pressé.

## Revendications

1. Moule (E1, E2, P) pour la fabrication d'un corps creux (1) de flacon en verre (F), le corps creux (1) étant destiné à être associé à un fond rapporté (2) pour constituer le flacon, le corps creux (1) comprenant une extrémité inférieure ouverte (11) donnant accès à un intérieur creux (15), une extrémité supérieure formant un col de flacon (12) adapté au montage d'un organe de distribution (4), tel qu'un bouchon ou une pompe, et une section principale creuse (14) reliant les deux extrémités, cette section principale creuse (14) définissant une surface interne (142) et une surface externe (141), le moule comprenant un ensemble d'empreintes externes de moule (E1, E2) pour mouler la surface externe (141) et le col de flacon (12), **caractérisé en ce que** le moule comprend en outre un poinçon de forme (P) qui est enfoncé dans l'ensemble d'empreintes externes (E1, E2) pour former la surface interne (142), le poinçon de forme (P) pénétrant dans l'ensemble d'empreintes externes (E1, E2) par une ouverture (O) qui correspond à l'extrémité ouverte (11) du corps creux (1) du flacon, l'ensemble d'empreintes externes (E1, E2) et le poinçon (P) définissant ensemble une cavité de moulage/pressage (C) dans laquelle le verre en fusion (G) est pressé par l'enfoncement du poinçon de forme (P) dans l'ensemble d'empreintes externes (E1, E2).

2. Moule selon la revendication 1, dans lequel le poinçon de forme (P) comprend un pointeau (P1) pour former l'intérieur du col de flacon (12).

3. Moule selon la revendication 1 ou 2, dans lequel le poinçon de forme (P) comprend une paroi externe structurée (P2) présentant des reliefs ayant un rayon de courbure inférieur à environ 2 mm, et avantageusement une conicité comprise entre 0,5 et 10°.

4. Moule selon la revendication 1, 2 ou 3, dans lequel le poinçon de forme comprend un cylindre de faible conicité pourvu d'orifices latéraux pour le passage de tiroirs de forme, le cylindre comprenant avantageusement un axe interne mobile permettant de sortir et rentrer les tiroirs de forme.

5. Procédé de fabrication d'un corps creux (1) de flacon en verre (F), le corps creux (1) étant destiné à être associé à un fond (2) pour constituer le flacon, le corps creux (1) comprenant une extrémité inférieure ouverte (11) donnant accès à un intérieur creux (15), une extrémité supérieure formant un col de flacon (12) adapté au montage d'un organe de distribution (4), tel qu'un bouchon ou une pompe, et une section principale creuse (14) reliant les deux extrémités, cette section (14) définissant une surface interne (142) et une surface externe (141), le procédé comprenant de mouler le corps creux (1) dans un moule comprenant un ensemble d'empreintes externes (E1, E2) pour former la surface externe (141) et le col de flacon (12), du verre en fusion (G) étant introduit dans l'ensemble d'empreintes externes (E1, E2), le procédé étant **caractérisé en ce qu'**un poinçon de forme (P) est enfoncé dans l'ensemble d'empreintes externes (E1, E2) pour presser le verre en fusion (G) dans une cavité moulage/pressage (C) formée conjointement par l'ensemble d'empreintes externes (E1, E2) et le piston de forme (P), le poinçon de forme (P) pénétrant dans l'ensemble d'empreintes externes (E1, E2) par une ouverture (O) qui correspond à l'extrémité inférieure ouverte (11) du corps creux (1).

6. Procédé de fabrication selon la revendication 5, dans lequel l'intérieur du col de flacon (12) est formé par le poinçon de forme (P).

7. Procédé de fabrication selon la revendication 5, dans lequel l'intérieur du col de flacon (P) est réalisé par usinage, avantageusement par alésage ou perçage, puis rodage.

8. Procédé de fabrication selon l'une quelconque des revendications 5 à 7, dans lequel le fond (2) est fixé à l'extrémité inférieure (11) du corps creux par collage, vissage, encliquetage ou soudage.

9. Flacon réalisé selon le procédé de fabrication de l'une quelconque des revendications 5 à 7, dans lequel un joint d'étanchéité (3) est interposé entre l'extrémité inférieure (11) du corps creux (1) et le fond (2).

10. Flacon selon la revendication 9, dans lequel le fond rapporté (2) est collé, avantageusement par colle UV sous pression avec compression du joint d'étanchéité (3), à l'extrémité inférieure (11) du corps creux (1) dans une zone de collage périphérique qui est située à l'extérieur du joint d'étanchéité (3).

11. Flacon réalisé selon le procédé de fabrication de l'une quelconque des revendications 5 à 7, dans lequel la surface interne (142) du corps creux (1) comprend des reliefs ayant un rayon de courbure inférieur à environ 2 mm, et avantageusement une conicité comprise entre 0,5 et 10°.

12. Flacon réalisé selon le procédé de fabrication de l'une quelconque des revendications 5 à 7, contenant au moins un élément décoratif inerte introduit dans le corps creux (1) par l'extrémité inférieure ouverte (11) avant fixation du fond (2).

13. Flacon réalisé selon le procédé de fabrication de l'une quelconque des revendications 5 à 7, dans lequel la surface interne (142) du corps creux (1) et/ou le fond rapporté (2) comprennent un revêtement décoratif.

## Patentansprüche

1. Form (E1, E2, P) für die Herstellung eines Hohlkörpers (1) als Flakon aus Glas (F), wobei der Hohlkörper (1) dazu bestimmt ist, einem angesetzten Boden (2) zugeordnet zu werden, um den Flakon zu bilden, wobei der Hohlkörper (1) ein unteres offenes Ende (11), welches auf einen hohlen Innenraum (15) Zugriff gibt, ein oberes Ende, welches einen Flakonhals (12) bildet, der zum Montieren einer Ausgabeeinrichtung (4), wie eines Stöpsels oder einer Pumpe, geeignet ist, und einen hohlen Hauptabschnitt (14), der die zwei Enden verbindet, umfasst, wobei dieser hohle Hauptabschnitt (14) eine Innenfläche (142) und eine Außenfläche (141) definiert, wobei die Form einen Aufbau von externen Nestern in der Form (E1, E2) umfasst, um die Außenfläche (141) und den Flakonhals (12) zu formen, **dadurch gekennzeichnet, dass** die Form des Weiteren einen Formstempel (P) umfasst, der in den Aufbau von externen Nestern (E1, E2) eingepresst wird, um die Innenfläche (142) zu bilden, wobei der Formstempel (P) in den Aufbau von externen Nestern (E1, E2) durch eine Öffnung (O) eindringt, die dem offenen Ende (11) des Hohlkörpers (1) des Flakons entspricht, wobei der Aufbau von externen Nestern (E1, E2) und der Stempel (P) zusammen einen Form-/Presshohlraum (C) definieren, in den das schmelzflüssige Glas (G) durch Einpressen des Formstempels (P) in den Aufbau von externen Nestern (E1, E2) gepresst wird.

2. Form nach Anspruch 1, wobei der Formstempel (P) eine Düsennadel (P1) umfasst, um das Innere des Flakonhalses (12) zu bilden.

3. Form nach Anspruch 1 oder 2, wobei der Formstempel (P) eine strukturierte Außenwand (P2) umfasst, die Aussparungen mit einem Biegeradius von weniger als etwa 2 mm und vorteilhafterweise eine Kegeligkeit zwischen 0,5° und 10° aufweist.

4. Form nach Anspruch 1, 2 oder 3, wobei der Formstempel einen Zylinder von leichter Kegeligkeit umfasst, der mit seitlichen Öffnungen für den Durchgang von Formeinschüben versehen ist, wobei der Zylinder vorteilhafterweise eine interne mobile Achse umfasst, die ein Austreten und Eintreten der Formeinschübe ermöglicht.

5. Verfahren zur Herstellung eines Hohlkörpers (1) als Flakon aus Glas (F), wobei der Hohlkörper (1) dazu bestimmt ist, einem angesetzten Boden (2) zugeordnet zu werden, um den Flakon zu bilden, wobei der Hohlkörper (1) ein unteres offenes Ende (11), welches auf einen hohlen Innenraum (15) Zugriff gibt, ein oberes Ende, welches einen Flakonhals (12) bildet, der zum Montieren einer Ausgabeeinrichtung (4), wie eines Stöpsels oder einer Pumpe, geeignet ist, und einen hohlen Hauptabschnitt (14), der die beiden Enden verbindet, umfasst, wobei dieser Abschnitt (14) eine Innenfläche (142) und eine Außenfläche (141) definiert, wobei das Verfahren das Formen des Hohlkörpers (1) in einer Form umfasst, die einen Aufbau von externen Nestern (E1, E2) umfasst, um die Außenfläche (141) und den Flakonhals (12) aus schmelzflüssigem Glas (G) zu formen, das in den Aufbau von externen Nestern (E1, E2) eingebracht wird, wobei das Verfahren **dadurch gekennzeichnet ist, dass** ein Formstempel (P) in den Aufbau von externen Nestern (E1, E2) eingepresst wird, um das schmelzflüssige Glas (G) in einen Form-/Presshohlraum (C) zu pressen, der zusammen von dem Aufbau von externen Nestern (E1, E2) und dem Formkolben (P) gebildet wird, wobei der Formstempel (P) in den Aufbau von externen Nestern (E1, E2) durch eine Öffnung (O) eindringt, die dem unteren offenen Ende (11) des Hohlkörpers (1) entspricht.

6. Herstellungsverfahren nach Anspruch 5, wobei das Innere des Flakonhalses (12) durch den Formstempel (P) gebildet wird.

7. Herstellungsverfahren nach Anspruch 5, wobei das Innere des Flakonhalses (P) durch maschinelle Bearbeitung, vorteilhafterweise durch Ausbohrung oder Bohrung, und dann Schleifen gefertigt wird.

8. Herstellungsverfahren nach einem der Ansprüche 5 bis 7, wobei der Boden (2) am unteren Ende (11) des Hohlkörpers durch Kleben, Verschraubung, Einrasten oder Schweißen befestigt wird.

9. Flakon, gefertigt nach dem Herstellungsverfahren nach einem der Ansprüche 5 bis 7, wobei eine Dichtungsverbindung (3) zwischen dem unteren Ende (11) des Hohlkörpers (1) und dem Boden (2) eingeschoben ist.

10. Flakon nach Anspruch 9, wobei der angesetzte Boden (2) vorteilhafterweise durch UV-Kleber unter Druck unter Komprimierung der Dichtungsverbindung (3) an das untere Ende (11) des Hohlkörpers (1) in einem umfänglichen Klebebereich geklebt ist, der sich außerhalb der Dichtungsverbindung (3) befindet.

11. Flakon, gefertigt nach dem Herstellungsverfahren nach einem der Ansprüche 5 bis 7, wobei die Innenfläche (142) des Hohlkörpers (1) Aussparungen umfasst, die einen Biegeradius von weniger als etwa 2 mm und vorteilhafterweise eine Kegeligkeit zwischen 0,5° und 10° aufweisen.

12. Flakon, gefertigt nach dem Herstellungsverfahren nach einem der Ansprüche 5 bis 7, enthaltend mindestens ein inertes Dekorationselement, das über das untere offene Ende (11) vor Befestigung des Bodens (2) in den Hohlkörper (1) eingebracht wird.

13. Flakon, gefertigt nach dem Herstellungsverfahren nach einem der Ansprüche 5 bis 7, wobei die Innenfläche (142) des Hohlkörpers (1) und/oder der angesetzte Boden (2) eine dekorative Verkleidung umfassen.

## Claims

1. A mold (E1, E2, P) for the manufacture of a hollow body (1) of a glass bottle (F), the hollow body (1) being designed to be associated with an applied bottom (2) to constitute the bottle, the hollow body (1) comprising an open lower end (11) giving access to a hollow interior (15), an upper end forming a bottle neck (12) adapted to the mounting of a distribution member (4) such as a plug or a pump, and a hollow main section (14) connecting the two ends, this hollow main section (14) defining an internal surface (142) and an external surface (141), the mold comprising a set of external mold cavities (E1, E2) for molding the external surface (141) and the bottle neck (12), **characterized in that** the mold also comprises a shape-cutting punch (P) which is pressed into the set of external cavities (E1, E2) to form the internal surface (142), the shape-cutting punch (P) penetrating into the set of external cavities (E1, E2) through an opening (0) which corresponds to the open end (11) of the hollow body (1) of the bottle, the set of external cavities (E1, E2) and the punch (P) defining together a molding/pressing cavity (C) in which the molten glass (G) is pressed by pressing the shape-cutting punch (P) into the set of external cavities (E1, E2).

2. The mold according to claim 1, wherein the shape-cutting punch (P) comprises a punch (P1) for forming the interior of the bottle neck (12).

3. The mold according to claim 1 or 2, wherein the shape-cutting punch (P) comprises a structured external wall (P2) having reliefs having a radius of curvature less than approximately 2 mm. and advantageously a draft comprised between 0.5 and 10°.

4. The mold according to claim 1, 2 or 3, wherein the shape-cutting punch comprises a cylinder of small draft provided with lateral openings for the passage of shape-cutting slides, the cylinder advantageously comprising an internal movable axis allowing the shape-cutting slides to be put out and pulled in.

5. A manufacturing method for a hollow body (1) of a glass bottle (F), the hollow body (1) being designed to be associated with a bottom (2) to constitute the bottle, the hollow body (1) comprising an open lower end (11) giving access to a hollow interior (15), an upper end forming a bottle neck (12) adapted to the mounting of a distribution member (4), such as a plug or a pump, and a hollow main section (14) connecting the two ends, this section (14) defining an internal surface (142) and an external surface (141), the method including molding the hollow body (1) in a mold comprising a set of external cavities (E1, E2) for forming the external surface (141) and the bottle neck (12), molten glass (G) being introduced into the set of external cavities (E1, E2), the method being **characterized in that** a shape-cutting punch (P) is pressed into the set of external cavities (E1, E2) to press the molten glass (G) into a molding/pressing cavity (C) formed jointly by the set of external cavities (E1, E2) and the shape-cutting piston (P), the shape-cutting punch (P) penetrating into the set of external cavities (E1, E2) through an opening (0) which corresponds to the open lower end (11) of the hollow body (1).

6. The manufacturing method according to claim 5, wherein the interior of the bottle neck (12) is formed by the shape-cutting punch (P).

7. The manufacturing method according to claim 5, wherein the interior of the bottle neck (P) is produced by machining, advantageously by boring or piercing, then lapping.

8. The method of manufacture according to any one of claims 5 to 7, wherein the bottom (2) is attached to the lower end (11) of the hollow body by gluing, screwing, snapping-in or welding.

9. A bottle produced according to the manufacturing method of any one of claims 5 to 7, wherein a seal (3) is interleaved between the lower end (11) of the hollow body (1) and the bottom (2).

10. The bottle according to claim 9, wherein the applied bottom (2) is glued, advantageously by UV adhesive under pressure with compression of the seal (3), at the lower end (11) of the hollow body (1) in a peripheral gluing zone which is situated at the exterior of the seal (3).

11. The bottle produced according to the manufacturing method of any one of claims 5 to 7, wherein the internal surface (142) of the hollow body (1) comprises reliefs having a radius of curvature less than approximately 2 mm, and advantageously a draft comprised between 0.5 and 10°.

12. The bottle produced according to the manufacturing method of any one of claims 5 to 7, containing at least one inert decorative element introduced into the hollow body (1) by the open lower end (11) prior to attachment of the bottom (2).

13. The bottle produced according to the manufacturing method of any one of claims 5 to 7, wherein the internal surface (142) of the hollow body (1) and/or the applied bottom (2) comprises a decorative coating.
